# EUROPÄISCHE PATENTSCHRIFT

(11) **EP 0 248 204 B1**
(45) Veröffentlichungstag und Bekanntmachung des Hinweises auf die Patenterteilung: **27.01.1993**
(21) Anmeldenummer: 87106139.6
(22) Anmeldetag: 28.04.1987
(51) Int. Cl.: H04N 1/12

(54) **Optische Anordnung zur zeilenweisen Beleuchtung von Abtastvorlagen**
Optical arrangement for the line-wise illumination of scanned originals
Système optique pour l'éclairage par ligne d'une image balayée

(30) Priorität: 02.05.1986 DE 3614888
(43) Veröffentlichungstag der Anmeldung: 09.12.1987
(73) Patentinhaber: Linotype-Hell Aktiengesellschaft, D-65731 Eschborn (DE)
(72) Erfinder: Gebhardt, Axel, D-2301 Mönkeberg (DE)

(56) Entgegenhaltungen:
- EP-A- 0 065 242
- DE-A- 1 221 270
- DE-A- 2 850 701
- DE-A- 3 100 058
- US-A- 3 721 828
- US-A- 4 220 978
- US-A- 4 490 740

## Beschreibung

Die Erfindung betrifft eine optoelektronische Anordnung zum zeilenweisen Abtasten von Farbvorlagen in der Reproduktionstechnik mit einer Lichtquelle, deren Licht über ein Filterrad auf einen faseroptischen Querschnittswandler gelangt, dessen Ausgang als lineares Lichtband ausgebildet ist, das der abzutastenden Zeile entspricht, wobei das Filterrad Filtersätze zur Farbseparation des Lichts der Lichtquelle in einzelne Farben, z. B. Rot, Grün, Blau (RGB), enthält.

In der Reproduktionstechnik werden derzeit häufig als lineare Lichtquellen für die Vorlagenabtastung Leuchtstoffröhren verwendet. Weiterhin wird bei der Vorlagenabtastung in Verbindung mit der Bewegung von CCD-Zeilen in Vorschubrichtung eine Flächenbeleuchtung angewendet.

Diese Beleuchtungsanordnungen haben den Nachteil, daß der optische Wirkungsgrad gering ist und daß sie nicht geeignet sind, die Vorlage mit farbigem Licht zeilenweise zu beleuchten.

In der US-A-4,490,740 ist eine Anordnung zum mehrfarbigen Abtasten von Vorlagen mit einem feststehenden Vorlagentisch beschrieben, die zur Erzeugung des mehrfarbigen Abtastlichts ein rotierendes Filterrad aufweist. Das durch das Filterrad durchtretende Licht wird mittels eines faseroptischen Querschnittswandlers in ein zeilenförmiges Lichtband umgewandelt, das über die Vorlage geführt wird. Das von der Vorlage reflektierte Licht gelangt über einen Umlenkspiegel und eine Optik auf eine Fotodiodenzeile. Sowohl die Beleuchtungseinheit (Filterrad und Querschnittswandler) als auch die Lichtaufnahme mit Umlenkspiegel, Optik und Fotodiodenzeile werden unterhalb des Vorlagentischs zur Abtastung der Vorlage entlang der Vorlage bewegt. Dies hat die Nachteile, daß der faseroptische Querschnittswandler bewegt und damit verbogen wird, wodurch er seine optischen Übertragungseigenschaften nachteilig ändert und daß sämtliche Ungleichförmigkeiten im gesamten Bewegungsablauf sowie Erschütterungen Bildstörungen hervorrufen.

Diese Anordnung hat aber weiterhin den Nachteil, daß sie einen schlechten Lichtwirkungsgrad hat und daß zusätzlich die Intensitätsverteilung des Lichtes am Ausgang des durch die Fasern gebildeten Lichtbandes ungleichförmig ist. Der schlechte Wirkungsgrad resultiert darin, daß das Licht am Ausgang der einzelnen Lichtleiter divergiert. Die unterschiedliche Intensitätsverteilung ist durch die unterschiedlichen Eigenschaften der einzelnen Fasern bedingt und führt zu Streifenbildung bei der Reproduktion. Durch die Bewegung des faseroptischen Wandlers ändert sich zusätzlich noch die Intensitätsverteilung, so daß noch eine weitere Verschlechterung der Bildqualität eintritt.

Aufgabe der vorliegenden Erfindung ist es, für CCD-Farbabtastung eine Beleuchtungsanordnung (Lichtband) zu schaffen, die im gesamten sichtbaren Teil des Spektrums hohe Beleuchtungsstärke und gleichmäßige Ausleuchtung auf der Vorlage ermöglicht. Außerdem ist eine tonwertrichtige Schwarz-Weiß-Wiedergabe von Farbvorlagen wünschenswert.

Diese Aufgabe wird durch die Merkmale der Ansprüche 1 und 2 gelöst. Vorteilhafte Weiterbildungen der Erfindungen sind in den abhängigen Ansprüchen beschrieben. Die Erfindung wird im folgenden anhand der Figuren 1 bis 6 näher erläutert. Es zeigen:
- Figur 1 a: Eine Abtasteinreichtung für Vorlagen mit einer CCD-Abtastzeile als Schnittzeichnung,
- Fig. 1b: die Abtastvorrichtung gemäß Fig 1a in Draufsicht,
- Fig. 1c und 1d: eine weitere Darstellung der erfindungsgemäßen Abtastvorrichtung,
- Fig. 2: einen Querschnitt durch das Lampenhaus der Abtastvorrichtung,
- Fig. 3a und 3b: eine Darstellung des Farb-Filterrads der Abtastvorrichtung,
- Fig. 4a und 4b: den Strahlengang für Durchsichtbeleuchtung mit zweistufiger Abbildung,
- Fig. 5a und 5b: ein weiteres Ausführungsbeispiel für den Strahlengang der Abtastanordnung.
- Fig. 6: eine Darstellung der spektralen Empfindlichkeitskurven für RGB und V (λ).

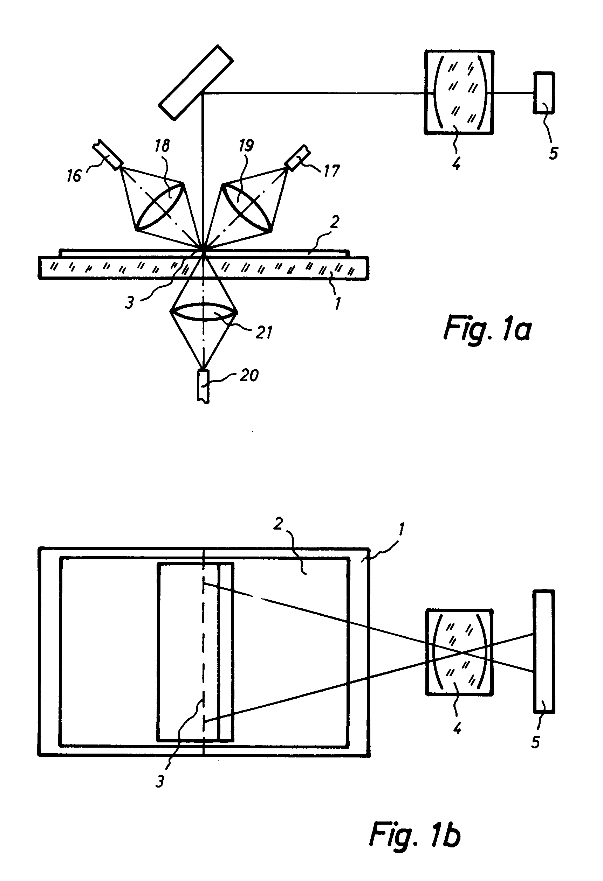

Die Abtastanordnung gemäß Fig 1a und 1b (auch Scanner genannt), weist einen in Vorschubrichtung beweglichen flachen Vorlagentisch (1) zur Aufnahme von Durchsicht- und Aufsichtvorlagen (2) auf.

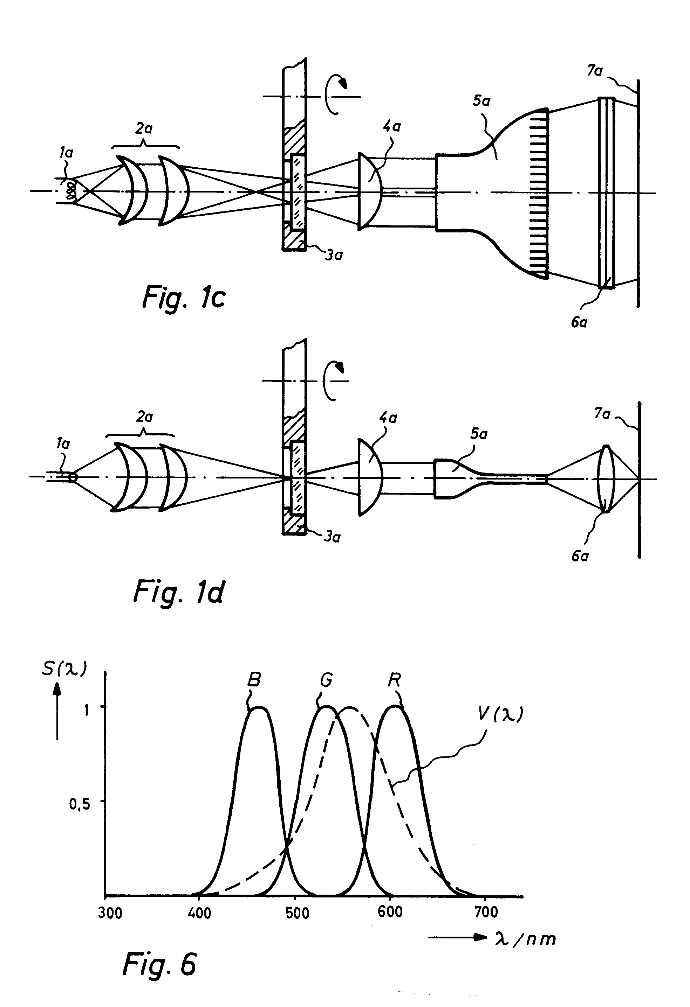

Wie aus Fig. 1 a ersichtlich, wird die abzutastende Vorlage (2) mit einem Lichtband (3) mit einer Breite von etwa 1 mm beleuchtet und mittels eines Makroobjektives (4) auf eine CCD-Zeile (5) abgebildet. Fig. 1 b zeigt die Anordnung gemäß Fig. 1 a in Draufsicht.

Die Fig 1c und 1d zeigen die Lichtquelle zur Erzeugung des Lichtbandes (3) mit einer Halogenlampe (1 a) und einem Querschnittswandler (5 a).

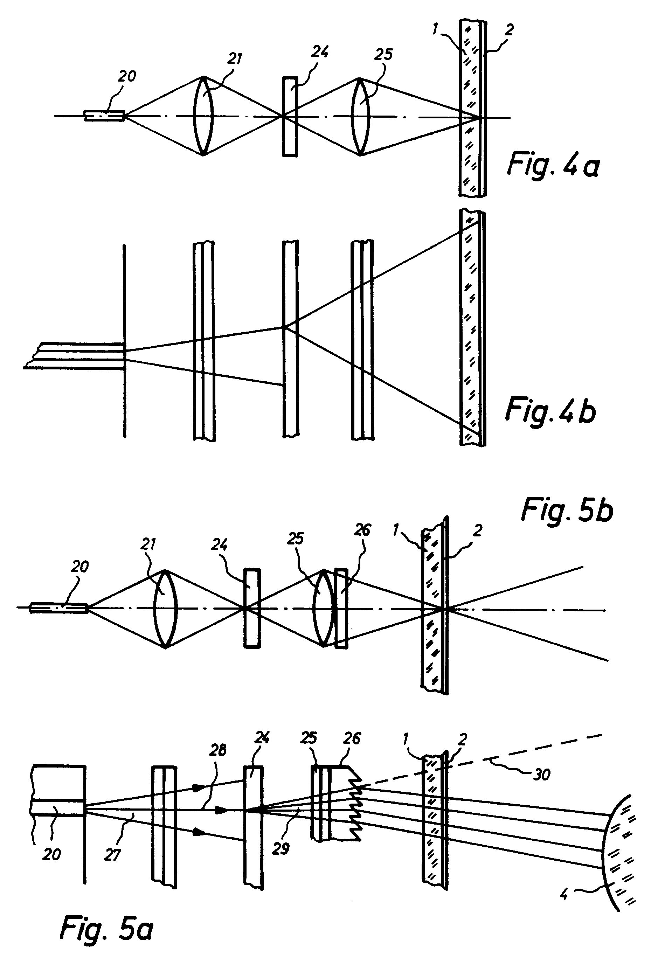

Die Halogenlampe (1a) z. B. OSRAM 12 V - 50 W, erzeugt weißes Licht. Ein Kondensorsystem (2a) fokussiert das Wendelbild auf ein Filterrad (10, 3a), welches Interferenzfilter sowie passende Massefilter zur Erzeugung der Primärfarben R, G, B enthält. Diese Abbildung des Wendels auf das Filter ist besonders vorteilhaft, da hierdurch ein hoher Wirkungsgrad des Filterrades (duty cycle) erreicht wird. Das Licht wird von der Linse (4a) kollimiert und auf den runden Querschnitt des Querschnittswandlers (5a) (Kreis/Linie) gegeben. Auch hier tritt durch die Anpassung des Eintritts-Querschnitts des faseroptischen Querschnittswandlers eine zusätzliche Verbesserung des Wirkungsgrades ein. Die Fasermündungen des zur Linie ausgeformten Querschnittswandlers (5a) werden mittels einer Zylinderlinse (6a) (PMMA) auf die zu beleuchtende Vorlage (7a) abgebildet, so daß ein zeilenförmiges Lichtband entsteht, durch das infolge des Filterrades eine zyklische Beleuchtung der Vorlage mit den Primärfarben erfolgt. Es ist Aufsicht- und Durchsichtbeleuchtung möglich, was in Fig. 4 a dargestellt ist.

Folgende Varianten liegen im Rahmen der Erfindung: Als Lichtquelle kann eine Xenon-Lampe, statt des Filterrades kann ein abstimmbares akustooptisches Filter verwendet werden.

Bei einer Abtastanordnung gemäß der Fig 1a - 1d, d. h. für hochauflösende Abtaster werden heute mit Vorteil eindimensionale CCD-Zeilen benutzt. Lineare CCD-Zeilen stehen mit bis zu 5000 Pixeln Länge zur Verfügung, während zweidimensionale CCD-Arrays sich an die Fernsehnorm anpassen (z. B. Fairchild CCD 211, 488 x 380 pixel).

Für die beschriebene Beleuchtungsanordnung läßt sich, wie bereits erwähnt, vorteilhaft ein faseroptischer Querschnittswandler einsetzen, weil hierdurch, ausgehend von einer punktförmigen Lichtquelle (Halogenlampe, Xenon-Bogenlampe), ein linienförmiges Lichtband erzeugt werden kann. Das Licht der Punktlichtquelle läßt sich einfach mit Farbfiltern zyklisch umschalten, und man kommt somit bei der Abtastung farbiger Bilder mit nur einer CCD-Zeile aus. Der optische Wirkungsgrad ist bei zeilenweiser Beleuchtung gegenüber flächenhafter Beleuchtung wesentlich größer, der Störabstand (Streulichteinfluß) gegenüber flächenhafter Beleuchtung wird verbessert und Korrekturen von bildortabhängigen Ungleichförmigkeiten der Beleuchtung, z. B. Randabfall der Beleuchtung, Vignettierung des Abtastobjektives, sind weniger aufwendig als in einer zweidimensionalen Anordnung.

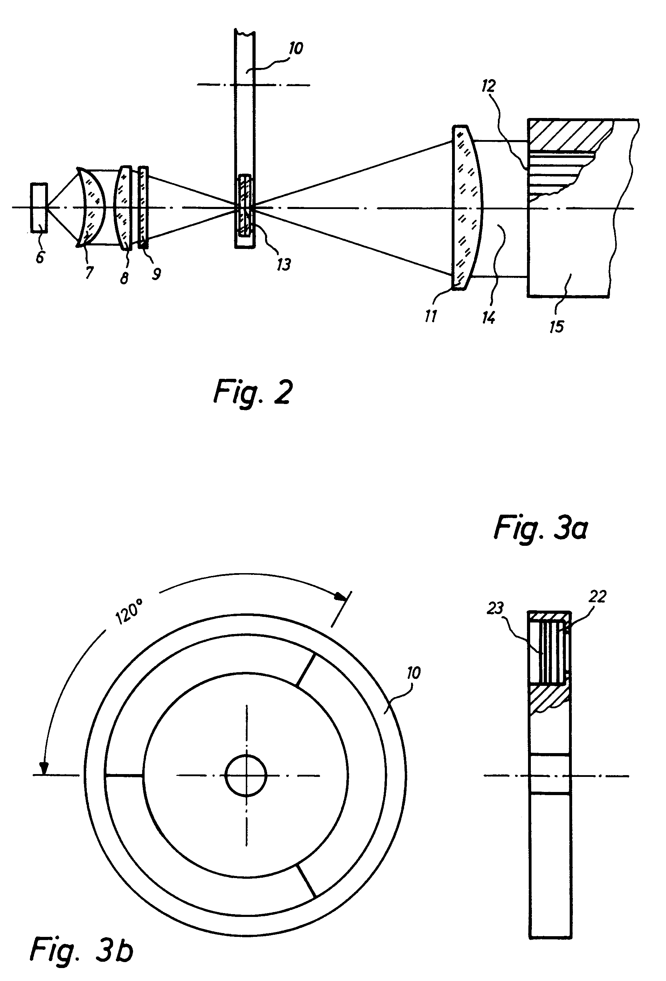

Die Beleuchtungsanordnung kann, wie in Fig. 2 in vorteilhafter Weise dargestellt, aus einem Lampenhaus mit einer Lichtquelle (6), einem Kondensorsystem (7, 8), einem IR-Sperrfilter (9), einem Farbfilterrad (10), einer Kollimatorlinsen (11), die das Licht auf den Eingangsquerschnitt des Querschnittswandlers (15) gibt, dessen Eingangsquerschnitt dem Durchmesser des Lichtbündels (14) angepaßt ist, bestehen.

Aus Gründen der optimalen Lichtausnutzung kann das Lampenhaus spiegelsymmetrisch zur Lichtquelle (6) gebaut sein, um zwei faseroptische Querschnittswandler (15) gleichzeitig zu beleuchten.

Durch den Kondensor (7, 8) mit einer Öffnungszahl S etwa 1 und die Zwischenabbildung (13) wird der Lampenwendel (6) auf das Farbfilterrad ca. 3 mal vergrößert. Die Kollimationslinse (11) kollimiert das Lichtbündel so, daß das Bündel (14) gleichmäßige Leuchtdichte besitzt und den Querschnittswandlereintritt leicht überfüllt.

Die Querschnittswandlereintrittsfläche (12) kann verschieden groß sein, je nach Länge der Abtastzeile (Aufsicht/Durchsicht). Durch die Wahl der Brennweite der Kollimatorlinse (11) kann der Bündeldurchmesser (14) an den Durchmesser des Querschnittswandlers angepaßt werden.

Das Farbfilterrad (10) der Fig. 3 a und 3 b besteht aus 3 Sektoren von je 120° abzüglich der Fassungskanten der Filter. Die Filterradsektoren enthalten dichroitische Filter (22) - ROT, GRÜN, BLAU - und zusätzliche Massefilter, d. h. Farbgläser (23), mit denen die Überalles-Spektralempfindlichkeit an die bekannten Scannerkurven angepaßt wird. Anstelle des RGB-Filterrades (10) läßt sich ein V (λ)-Filter einschalten, welches für tonwertrichtige Farbwiedergabe benutzt werden kann. Diese Kurven sind in der später beschriebenen Fig. 6 dargestellt.

In Fig. 1 a können die Vorlagen sowohl in Aufsicht- als auch in Durchsicht beleuchtet werden. Die Aufsichtbeleuchtung wird durch zwei Querschnittswandler realisiert, deren Fasermündungen (16, 17) mittels Zylinderlinsen (18, 19) die Vorlage beleuchten.

Bei Aufsichtbeleuchtung ist der Strahlengang der Zylinderlinsen symmetrisch, d. h. die Lichtleitfasermündungen werden 1:1 auf die Vorlage abgebildet. Die Brennweite der Zylinderlinsen kann vorzugsweise f = 10 mm sein. Bei Verwendung von Acrylmonofibern mit Faserdurchmesser 0,75 mm für den Querschnittswandler entsteht ein Lichtband von ca. 1 mm Breite.

Bei Durchsichtbeleuchtung ist der Strahlengang der Durchsichtbeleuchtung (20, 21, Fig 1a) ebenfalls symmetrisch, es wird jedoch nur ein Querschnittswandler benutzt.

Die Figuren 4 a und 4 b zeigen eine vorteilhafte Weiterbildung der Erfindung bei Durchsichtbeleuchtung mittels einer zweistufigen Abbildung. Zur Verringerung von störenden Ungleichmäßigkeiten der Leuchtdichte der Abtastzeile wird die Faserzeile (20) vorzugsweise mittels einer Zylinderlinse (21) zunächst auf eine Streuscheibe (24) abgebildet. Die Streuscheibe wird wiederum in vorteilhafter Weise mittels einer zweiten Zylinderlinse (25) auf die Vorlage abgebildet.

Die Figuren 5 a und 5 b zeigen eine weitere vorteilhafte Weiterbildung der Erfindung, die in der Einführung einer Feldlinse besteht. Bei großen Bildwinkeln fällt durch die Vignettierung des Abtastobjektives und durch die Beleuchtung die Bildhelligkeit zum Bildrand ab. Durch eine Feldlinse, d. h. eine Fresnelzylinderlinse (26) kann dieser Helligkeitsabfall am Bildrand kompensiert werden.

Der in Fig. 5 a gezeigte Strahlengang veranschaulicht am Beispiel des Strahlenbündels (27), das aus dem Lichtleiter (20) austritt, diese Funktionsweise. Ein Einzelstrahl (28) aus dem Bündel (27) wird an der Streuscheibe (24) in ein sekundäres Bündel (29) gestreut. Dieses Bündel wird durch die Zylinderlinse (25) auf die Vorlage (2) fokussiert und gleichzeitig durch die Fresnelzylinderlinse (26) zur Pupille der Abtastoptik (4) hin abgelenkt. Der Einzelstrahl (30) würde ohne die Linse (26) die Pupille der Abtastoptik verfehlen, wodurch eine Verringerung der Bildhelligkeit am Bildrand eintreten würde. Wie man außerdem sieht, wird von einem einzelnen Lichtleiter ein breiter Streifen der Vorlage ausgeleuchtet, wodurch sich auf der Vorlage eine Überlappung und damit auch eine Mittelung der Helligkeit einer größeren Anzahl von Lichtleitern ergibt, was zu einer gleichmäßigeren Ausleuchtung innerhalb der abgetasteten Zeile führt.

Fig. 6 zeigt die Filterkurven S (λ) für die Gewinnung der spektralen R, G, B-Anteile aus dem weißen Licht der Lichtquelle. Hierbei ist gemäß der Erfindung eine Anpassung der Filterkurven an die Empfindlichtkeitskurve der CCD-Zeile vorgenommen worden. Es werden für R, G, B die bei Farbscannern üblichen dichroitischen Filter verwendet, denen zur Korrektur der Filterkurve Massefilter, d. h. Farbgläser parallel geschaltet werden. Zur Korrektur der Amplituden von R, G, B auf gleicher Höhe kann je nach Bedarf ein Neutralfilter zusätzlich parallelgeschaltet werden, wozu übliche Graugläser eingesetzt werden.

Bei der Schwarzweiß-Wiedergabe farbiger Vorlagen kann anstelle der Farbfilter ein einziger Filter mit einer Charakteristik, die der Augenempfindlichkeit entspricht, eingesetzt werden. Diese Kurve wird auch V (λ)-Kurve genannt und ist in Fig. 6 ebenfalls als Funktion dargestellt. Dieser Filterkurvenverlauf ist erwünscht, damit die Schwarzweiß-Wiedergabe tonwertrichtig erfolgt.

Ein großer Vorteil dieser erfindungsgemäßen Abtastanordnung besteht darin, daß man mit einer CCD-Zeile auskommt, daß diese nicht bewegt werden muß und auch sonst außer dem Filterrad keine optischen Teile bewegt werden müssen. Außerdem gestattet diese Anordnung eine äußerst gleichmäßige Zeilenausleuchtung auch an den Rändern der Zeile bei hoher Lichtausbeute, d. h. hohem Wirkungsgrad. Es ist sowohl Farb- als auch Schwarzweiß-Wiedergabe möglich und sowohl Aufsichts- wie Durchsichtsabtastung auch großer Vorlagen in einem Gerät. Selbstverständlich können diese Funktionen in einem Gerät auch einzeln realisiert werden, wenn ein Gerät nur für eine Abtast- oder Wiedergabeart benötigt wird. Ein Vorteil liegt auch in der Fertigung, da die gleiche optische Einheit für diese verschiedenen Anwendungszwecke verwendet werden kann.

In diesem Zusammenhang ist noch eine weitere Variante der Erfindung von Bedeutung, nämlich, daß anstelle des Makroobjektivs eine GRIN-Faseroptik in Verbindung mit einer Fotodiodenzeile verwendet wird, die die Länge der Abtastzeile aufweist. Solche GRIN-Faseroptiken sind z. B. in Photonics Spectra, Dezember 1982, Seiten 59 - 62, beschrieben. Durch diese Anordnung ist eine äußerst kompakte Bauweise möglich.

Bei Verwendung von Fotodiodenzeilen, die bereits selbst bei Beleuchtung mit weißem Licht eine Farbseparation vornehmen, kann das Filterrad entfallen. Bei diesen Fotodiodenzeilen sind jedem Pixel (Picture Element) mehrere Fotodioden zugeordnet, die durch Vorschaltung von entsprechenden dichroitischen Filtern die gewünschten Farbsignale liefern.

## Patentansprüche

1. Optoelektronische Anordnung zum zeilenweisen Abtasten von Farbvorlagen in der Reproduktionstechnik mittels Fotodioden als optoelektrische Wandler mit einer Lichtquelle, deren Lichtstrom auf ein Filterrad gelangt, das mehrere Filter zur Farbseparation des Lichtes in mehrere Farben aufweist mit einem faseroptischen Querschnittswandler, dessen Ausgangsquerschnitt ein lineares Lichtband bildet, das der abzutastenden Zeile entspricht, dadurch gekennzeichnet, daß eine punktförmige Weißlichtquelle vorgesehen ist, deren Lichtstrom über ein Kondensorsystem auf das Filterrad abgebildet wird, daß der Eingang des faseroptischen Querschnittswandlers so ausgebildet ist, daß die Form des Eingangsquerschnitts dem Querschnitt des ankommenden Lichtbündels angepaßt ist, daß in dem aus der linearen Faseranordnung austretenden divergierenden Lichtstrom mindestens eine sich über die Gesamtlänge der linearen Faseranordnung erstrekkende Zylinderlinse angeordnet ist, durch die der divergierende Lichtstrom in einen linienförmigen Lichtstreifen umgewandelt wird, der auf die abzutastende Vorlage gerichtet ist und die Abtastzeile der Vorlage beleuchtet, und daß ein Makroobjektiv vorgesehen ist, durch das das von der Vorlage reflektierte oder durchgelassene Licht auf eine zur Abtastzeile ausgerichtete Fotodiodenzeile auftrifft.

2. Optoelektronische Anordnung zum zeilenweisen Abtasten von Farbvorlagen in der Reproduktionstechnik mittels Fotodioden als optoelektrische Wandler mit einer Lichtquelle, deren von der Vorlage reflektierter oder durchgelassener Lichtstrom auf die Fotodioden gelangt, wobei die Farbseparation des Lichtes in mehrere Farben durch über den Fotodioden angeordnete und mit den Fotodioden integrierte Filter erfolgt und mit einem faseroptischen Querschnittswandler, dessen Ausgangsquerschnitt ein lineares Lichtband bildet, das der abzutastenden Zeile entspricht, dadurch gekennzeichnet, daß eine punktförmige Weißlichtquelle vorgesehen ist, deren Lichtstrom über ein Kondensorsystem auf den Eingang des faseroptischen Querschnittswandlers gelangt, daß der Eingang des faseroptischen Querschnittswandlers so ausgebildet ist, daß die Form des Eingangsquerschnitts dem Querschnitt des ankommenden Lichtbündels angepaßt ist, daß in dem aus der linearen Faseranordnung austretenden divergierenden Lichtstrom mindestens eine sich über die Gesamtlänge der linearen Faseranordnung erstreckende Zylinderlinse angeordnet ist, durch die der divergierende Lichtstrom in einen linienförmigen Lichtstreifen umgewandelt wird, der auf die abzutastende Vorlage gerichtet ist und die Abtastzeile der Vorlage beleuchtet, und daß ein Makroobjektiv vorgesehen ist, durch das das von der Vorlage reflektierte oder durchgelassene Licht auf eine zur Abtastzeile ausgerichtete Fotodiodenzeile auftrifft.

3. Anordnung nach Anspruch 1 oder 2, dadurch gekennzeichnet, daß als weiße Lichtquelle eine Halogen- oder Xenon-Lampe verwendet wird.

4. Anordnung nach Anspruch 1 und 3, dadurch gekennzeichnet, daß ein rotierendes Filterrad verwendet wird.

5. Anordnung nach einem der Ansprüche 1 - 4, dadurch gekennzeichnet, daß für Schwarzweiß-Wiedergabe farbiger Vorlagen ein Filter mit einer der Augenempfindlichkeit V (λ) entsprechenden Charakteristik vorgesehen ist.

6. Anordnung nach einem der Ansprüche 1 - 5, dadurch gekennzeichnet, daß bei der Abtastung von Aufsichtsvorlagen zwei Beleuchtungseinrichtungen vorgesehen sind, durch die der aus den Querschnittswandlern austretende Lichtstrom jeweils unter etwa 45° auf die Abtastzeile gerichtet ist.

7. Anordnung nach einem der Ansprüche 1 - 5, dadurch gekennzeichnet, daß bei Durchsichtsabtastung hinter dem Querschnittswandler zwei Zylinderlinsen derart angeordnet sind, daß zwischen den beiden Linsen eine Zwischenabbildung der linearen Faseranordnung entsteht, innerhalb der eine als Streifen ausgebildete Streuscheibe angeordnet ist.

8. Anordnung nach Anspruch 7, dadurch gekennzeichnet, daß zwischen Streuscheibe und zweiter Zylinderlinse eine Fresnellinse angeordnet ist.

9. Anordnung nach einem der Ansprüche 1, 3, 4 und 6 - 8, dadurch gekennzeichnet, daß die Filtersätze jeweils aus einem dichroitischen Filter, einem oder mehreren Farbgläsern und gegebenenfalls einem Neutralfilter bestehen, wobei die Filter so abgestimmt sind, daß für eine weiße oder transparente Vorlage in den drei Farbkanälen dieselben Signalamplituden in der Fotodiodenzeile für die R, G, B-Signale erzeugt werden.

10. Anordnung nach einem der Ansprüche 1 - 9, dadurch gekennzeichnet, daß die Fotodiodenzeile die Länge der Abtastzeile aufweist und daß anstelle des Makroobjektivs ein GRIN-Faseroptik verwendet wird.

## Claims

1. An opto-electronic arrangement for the linear scanning of coloured originals in reproduction technology by means of photodiodes as optoelectric transducers with a light source, the light flux of which arrives at a filter wheel, which has a plurality of filters for the colour separation of the light into a plurality of colours with a fibre-optic cross-section transducer, the output cross-section of which forms a linear band of light which corresponds to the line which is to be scanned, characterised in that a point source of white light is provided, the light flux of which is reproduced via a condenser system onto the filter wheel, that the input of the fibre-optic cross-section transducer is constructed such that the shape of the input cross-section is matched to the cross-section of the incoming light beam, that in the diverging light flux emerging from the linear fibre arrangement, at least one cylindrical lens is arranged, extending over the entire length of the linear fibre arrangement, through which lens the diverging light flux is converted into a linear strip of light, which is directed to the original which is to be scanned and illuminates the scanning line of the original, and that a macro objective is provided, through which the light reflected or allowed through by the original strikes a photodiode line aligned to the scanning line.

2. An optoelectric arrangement for the linear scanning of coloured originals in reproduction technology by means of photodiodes as optoelectric transducers with a light source, the light flux of which, reflected or allowed through by the original, arrives at the photodiodes, in which the colour separation of the light into a plurality of colours takes place through filters arranged over the photodiodes and integrated with the photodiodes and with a fibre-optic cross-section transducer, the output cross-section of which forms a linear band of light, which corresponds to the line which is to be scanned, characterised in that a point source of white light is provided, the light flux of which arrives via a condenser system at the input of the fibre-optic cross-section transducer, that the input of the fibre-optic cross-section transducer is constructed such that the shape of the input cross-section is matched to the cross-section of the incoming light beam, that in the diverging light flux emerging from the linear fibre arrangement at least one cylindrical lens is arranged, extending over the entire length of the linear fibre arrangement, through which the diverging light flux is converted into a linear strip of light, which is directed to the original which is to be scanned and illuminates the scanning line of the original, and that a macro objective is provided, through which the light reflected or allowed through by the original strikes a photodiode line aligned to the scanning line.

3. An arrangement according to Claim 1 or 2, characterised in that as white light source a halogen- or xenon lamp is used.

4. An arrangement according to Claim 1 and 3, characterised in that a rotating filter wheel is used.

5. An arrangement according to one of Claims 1- 4, characterised in that for the black-and-white reproduction of coloured originals a filter is provided having a characteristic corresponding to the intensity discrimination (λ).

6. An arrangement according to one of Claims 1 - 5, characterised in that in the scanning of originals viewed frontally, two illumination devices are provided, through which the light flux emerging from the cross-section transducers is directed in each case at approximately 45° onto the scanning line.

7. An arrangement according to one of Claims 1 - 5, characterised in that in the scanning of originals viewed rearwardly, behind the cross-section transducer two cylindrical lenses are arranged such that between the two lenses an intermediate reproduction of the linear fibre arrangement is produced, within which a diffusing screen, constructed as a strip, is arranged.

8. An arrangement according to Claim 7, characterised in that between the diffusing screen and the second cylindrical lens a Fresnel lens is arranged.

9. An arrangement according to one of Claims 1,3,4 and 6 - 8, characterised in that the filter sets in each case consist of a dichroic filter, one or more coloured filters and, if necessary, a neutral filter, in which the filters are coordinated such that for a white or transparent original in the three colour channels the same signal amplitudes are produced in the photodiode line for the R, G, B-signals.

10. An arrangement according to one of Claims 1 - 9, characterised in that the photodiode line has the length of the scanning line and that instead of the macro-objective, a GRIN-fibre optic is used.

## Revendications

1. Dispositif optoélectronique pour la lecture ligne par ligne de modèle en couleurs dans la technique de reproduction à l'aide de photodiodes, comme convertisseur optoélectrique avec une source lumineuse dont le flux lumineux arrive sur une roue filtre comportant plusieurs filtres pour la séparation des couleurs de la lumière en plusieurs couleurs, un convertisseur de section à fibres optiques dont la section de sortie forme un ruban de lumière linéaire, qui correspond à la ligne à détecter, dispositif caractérisé par une source ponctuelle de lumière blanche dont le flux lumineux arrive sur la roue filtre par l'intermédiaire d'un système à condenseur, l'entrée du convertisseur de section à fibres optiques étant telle que la forme de la section d'entrée soit adaptée à la section du faisceau lumineux incident, et le faisceau lumineux divergeant sortant du dispositif à fibres optiques, linéaires, est associé à une lentille cylindrique s'étendant au moins sur toute la longueur du dispositif linéaires à fibres, et qui transforme le faisceau lumineux divergeant en une bande lumineuse, linéaire dirigée sur le modèle à lire et qui éclaire la ligne du modèle à lire et un objectif macroscopique traversé par la lumière réfléchie ou transmise par le modèle pour l'envoyer sur une ligne de photodiodes alignée sur la ligne de détection.

2. Dispositif optoélectronique pour la lecture ligne par ligne de modèles en couleurs en technique de reproduction, à l'aide de photodiodes constituant le convertisseur optoélectrique, avec une source lumineuse, dont le faisceau lumineux réfléchi ou transmis par le modèle, arrive sur les photodiodes, la séparation de la lumière en plusieurs couleurs étant assurée par des filtres placés au-dessus des photodiodes et intégrés à celles-ci et un convertisseur de section, à fibres optiques, dont la section de sortie forme un ruban de lumière linéaire qui correspond à la ligne à détecter, dispositif caractérisé par une source ponctuelle de lumière blanche dont le flux lumineux arrive à travers un système à condensateur sur l'entrée du convertisseur de section à fibres optiques, cette entrée étant réalisée pour que la forme de sa section d'entrée soit adaptée à la section du faisceau lumineux incident, et le faisceau lumineux divergeant sortant du dispositif à fibres, linéaire, arrive sur une lentille cylindrique qui s'étend au moins sur toute la longueur du dispositif à fibres, linéaire, pour que le faisceau de lumière divergeante soit transformé en un ruban lumineux de forme linéaire dirigé sur le modèle à lire et éclaire la ligne de détection du modèle et a un objectif macroscopique à travers lequel la lumière réfléchie ou transmise par le modèle arrive sur une ligne de photodiodes alignée sur la ligne à lire.

3. Dispositif selon la revendication 1 ou 2, caractérisé en ce que la source lumineuse blanche est une lampe halogène ou une lampe xénon.

4. Dispositif selon les revendications 1 et 3, caractérisé en ce qu'il comporte une roue-filtre rotative.

5. Dispositif selon l'une des revendications 1 - 4, caractérisé par un filtre dont la caractéristique correspond à la caractéristique de sensibilité de l'oeil V (λ) pour la reproduction en noir et blanc de modèles en couleur.

6. Dispositif selon l'une des revendications 1 - 5, caractérisé en ce qu'à la détection de modèles par réflexion, il comporte deux dispositifs d'éclairage dirigeant le faisceau lumineux sortant du convertisseur de section, chaque fois suivant un angle de 45° sur la ligne de détection.

7. Dispositif selon l'une des revendications 1 - 5, caractérisé en ce qu'en cas de lecture par transparence, en aval du convertisseur de section, on a deux lentilles cylindriques de manière à ce qu'entre les deux lentilles, il se forme une image intermédiaire du dispositif linéaire de fibres, image intermédiaire au niveau de laquelle se trouve le disque de dispersion en forme de bande.

8. Dispositif selon la revendication 7, caractérisé par une lentille de Fresnel placée entre le disque de dispersion et la seconde lentille cylindrique.

9. Dispositif selon l'une des revendications 1, 3, 4 et 6 - 8, caractérisé en ce que les jeux de filtre se composent chaque fois d'un filtre dichroïque, d'un ou plusieurs verres en couleurs et le cas échéant d'un filtre neutre, les filtres étant accordés de façon que pour un modèle blanc ou transparent, ils créent les mêmes amplitudes de signaux dans les trois canaux en couleurs dans les cellules à photodiodes pour les signaux R, V, B.

10. Dispositif selon l'une des revendications 1 - 9, caractérisé en ce que la longueur de la ligne des photodiodes est égale à la longueur de la ligne de détection et utilise une optique à fibres GRIN à la place d'un objectif macroscopique.
